Europäisches Patentamt

European Patent Office

Office européen des brevets

(19)

(11) Veröffentlichungsnummer : **0 361 070 B1**

(12) **EUROPÄISCHE PATENTSCHRIFT**

(45) Veröffentlichungstag der Patentschrift :
12.08.92 Patentblatt 92/33

(51) Int. Cl.⁵ : **A01M 7/00, B05B 15/04**

(21) Anmeldenummer : **89115364.5**

(22) Anmeldetag : **19.08.89**

(54) **Vorrichtung zum Spritzen von Reihenkulturen.**

(30) Priorität : **30.08.88 DE 3829287**

(43) Veröffentlichungstag der Anmeldung :
**04.04.90 Patentblatt 90/14**

(45) Bekanntmachung des Hinweises auf die
Patenterteilung :
**12.08.92 Patentblatt 92/33**

(84) Benannte Vertragsstaaten :
**DE ES FR IT NL**

(56) Entgegenhaltungen :
**DE-A- 2 830 149
DE-A- 3 207 645
DE-U- 8 412 145
FR-A- 2 598 941
FR-A- 2 606 672
FR-A- 2 607 029**

(56) Entgegenhaltungen :
**GB-A- 2 157 935
Transactions of the American Society of Agricultural Engineers, Band 26, Nr. 3, Mai 1983,
Seiten 732-736, St. Joseph,Michigan, US; E.O.-
Beasley et al.**

(73) Patentinhaber : **John & Co.
Industriegebiet
W-7590 Achern (DE)**

(72) Erfinder : **John, Franz, Dipl.-Ing. (FH)
Morgenthalerstrasse 5
F-7590 Achern (DE)**
Erfinder : **Lipp, Willi
Sasbachrieder Strasse 1
W-7591 Sasbach (DE)**

(74) Vertreter : **Dr.-Ing. Hans Lichti Dipl.-Ing. Heiner
Lichti Dipl.-Phys. Dr. Jost Lempert
Postfach 41 07 60 Bergwaldstrasse 1
W-7500 Karlsruhe 41 (DE)**

## Beschreibung

Die Erfindung betrifft eine Vorrichtung nach dem Oberbegriff des Anspruchs 1. Solche Vorrichtungen sind bekannt (z. B. DE-A-32 07 645, DE-U-84 12 145). Gegenüber herkömmlichen Spritzen für Reihenkulturen, bei denen das Spritzmittel mittels Turbulatoren od. dgl. auf die Reihenkulturen ausgebracht wird, haben diese Geräte den Vorteil, daß fast alles überschüssige Spritzmittel, das nicht die Pflanze benetzt, sondern durch die Pflanzenreihe hindurchtritt, von der gegenüberliegenden Seitenwand des Spritztunnels aufgefangen und in die Sammelrinne abgeleitet wird, aus der es mittels einer Pumpe wieder dem Spritzmittelbehälter zugeführt wird. Da für eine wirksame Spritzung mit erheblichem Überschuß an Spritzmittel gearbeitet werden muß, um eine vollständige Applikation auf der Pflanze zu erhalten, werden mit diesen Geräten einerseits die teuren Spritzmittelverluste erheblich, nämlich bis zu 60 %, vermindert und wird andererseits die Umweltbelastung wesentlich reduziert.

Auch wenn sich die Verwendung solcher Geräte mit Spritztunnel für Reihenkulturen, z. B. für Wein-, Strauchobstkulturen etc., aus ökonomischen und ökologischen Gründen an sich anbietet, konnten sich diese Geräte in der Praxis bisher nicht durchsetzen. Die Ursachen sind vielfältig, doch ist in erster Linie der Grund darin zu sehen, daß es bisher nicht gelungen ist, das Spritzmittel in ausreichender Menge und mit gleichmäßiger Verteilung auf der Pflanze zu applizieren. Dies wiederum hat seine Ursache zum einen in strömungstechnischen Besonderheiten, die in einem solchen Spritztunnel herrschen, zum anderen in der unzureichenden Bewegung des Blattwerks der Pflanze, die jedoch notwendig ist, um das einzelne Blatt auf beiden Seiten ausreichend zu benetzen. Dies gilt vor allem für Pflanzen mit großflächigem Blattwerk, z. B. Weinreben.

Der Erfindung liegt die Aufgabe zugrunde, eine Vorrichtung nach dem Oberbegriff des Anspruchs 1 dahingehend weiterzuentwickeln, daß eine vollständige und regelmäßige Benetzung des Blattwerks erreicht wird.

Diese Aufgabe wird gemäß einem ersten Vorschlag der Erfindung mit den kennzeichnenden Merkmalen des Anspruchs 1 gelöst.

Bei dem bekannten Gerät ist der Spritztunnel am vorderen und/oder hinteren Ende durch flexible Materialstreifen oder - am hinteren Ende - durch eine Luftvorhang abgeschlossen, um einen möglichst dichten Abschluß des Tunnels zu erhalten und vor allem zu verhindern, daß der im Spritztunnel gebildete Spritznebel bei ungünstiger Windrichtung oder durch den Fahrtwind aus dem Spritztunnel herausgetragen wird. Zwar sind die Seitenwände abstandsveränderlich angeordnet, um sie je nach Pflanzenart und Wachstumsperiode an die Breite der Pflanzenreihe anzupassen, doch läßt sich der Abstand zur Pflanzenreihe wegen des gewünschten frontund rückseitigen Abschlusses nur in einem sehr engen Rahmen variieren. Dies führt dazu, daß der Spritzmittelstrahl unter Umständen aus zu geringem Abstand auf die Pflanzen trifft und frühzeitig abgelenkt oder reflektiert wird oder aber durch die Pflanzenreihe hindurch "schießt". Dies wird mit der Erfindung dadurch vermieden, daß der Spritztunnel über einen Teil seiner Länge eine größere Weite aufweist, so daß trotz eines dichten Abschlusses am vorderen und hinteren Ende einerseits ein Stau- und Wirbelraum für den Fahrtwind oder den natürlichen Wind gebildet wird, wodurch der Spritznebel besser im Spritztunnel gehalten wird, andererseits die Düsenrohre mit einem solchen Abstand von der Pflanzenreihe angeordnet werden können, daß eine Überlappung der Spritzkegel der einzelnen Düsen unmittelbar vor der Pflanzenreihe gewährleistet ist, was wiederum erst eine vollständige und regelmäßige Benetzung des Blattwerks gewährleistet. Dabei kann der Abstand so gering wie möglich gehalten werden, damit der Spritzmittelstrahl einerseits mit der notwendigen Energie auf das Blattwerk trifft und dieses in Bewegung versetzt, andererseits durch die Pflanzenreihe hindurchtritt, um auf der gegenüberliegenden Seite aufgefangen zu werden.

Mit den Merkmalen des Anspruchs 2 wird trotz der Vergrößerung der Tunnelweite erreicht, daß die Sammelrinne bis nahe oder unter das Blattwerk reicht, um das Abtropfen von Spritzmittel nach unten soweit als möglich zu verhindern.

Eine für die Bildung und die Haltung des Spritznebels im Spritztunnel besonders günstige Ausführung ist im Anspruch 3 gekennzeichnet. Zwei andere Ausgestaltungen für den Querschnitt des Spritztunnels ergeben sich aus den Ansprüchen 4 und 5.

Eine weitere Ausführungsform der Erfindung, die zusammen mit den vorgenannten verwirklicht sein kann, ist im Anspruch 6 gekennzeichnet. Die erfindungsgemäße Leiteinrichtung sorgt dafür, daß der Fahrtwind, gegebenenfalls auch eine entsprechend gerichtete Komponente des atmosphärischen Windes außerhalb des Spritztunnels in diesen umgelenkt wird und dort einen Luftstau erzeugt, der wiederum verhindert, daß der Spritznebel aufgrund des im allgemeinen innerhalb des Spritztunnels herrschenden Duchzugs nach hinten ausgetragen wird. Der Spritznebel wird zur Optimierung der Applikation im Spritztunnel gehalten. Zugleich entsteht eine stark turbulente Strömung im Spritztunnel, die die Verteilung des Spritzmittels günstig beeinflußt.

Die Ansprüche 7 bis 10 geben vorteilhafte Ausführungsformen der Leiteinrichtung wieder, während die Merkmale des Anspruchs 11 und 12 die Möglichkeit eröffnen, die in den Spritztunnel abgelenkte Luftmenge und deren Einströmrichtung in den Tunnel in Abhängigkeit von dem Spritzmittel und seiner Verteilung sowie in Abhängigkeit von der Windstärke und/oder der Fahrgeschwindigkeit zu ändern.

Die Wirksamkeit der Applikation wird auch von der Länge des Spritztunnels bestimmt. Je länger der Tunnel ist, um so länger kann der Spritznebel auf die Pflanze einwirken. Insoweit ist aber eine weitere Abhängigkeit von der Art der Pflanze und der Pflanzenbreite sowie von der Wachstumsperiode gegeben. Auch steht ein langer Spritztunnel der Forderung nach Wendigkeit des Gerätes entgegen, was insbesondere im Vorgewende der Reihenkultur von Bedeutung ist. Dem trägt die Erfindung mit den Merkmalen des Anspruchs 13 Rechnung, die einerseits eine Anpassung der Tunnellänge an die jeweilige Reihenkultur gestatten, andererseits durch eine entsprechende Antriebskopplung der Seitenwandabschnitte eine Verkürzung des Tunnels auch während der Arbeit, z. B. im Vorgewende, ermöglichen. Vorteilhafte Ausführungsbeispiele für die Kopplung der Seitenwandabschnitte geben die Ansprüche 14 und 15 wieder.

Die Merkmale des Anspruchs 16 empfehlen sich vornehmlich dann, wenn das Spritzmittel aus den Düsen als Aerosol, also als Flüssigkeit/Luftgemisch, verspritzt wird. Diese Spritztechnik hat den Vorteil, daß das Spritzmittel als fein verteilter Nebel in den Spritztunnel eintritt, erfordert aber einen höheren Spritzdruck, der wiederum zu einem erhöhten Druck im Spritztunnel führt. Dieser wird über die Perforation in den Schalenzwischenraum entlastet. Das auf die Perforation auftreffende Spritzmittel gelangt gleichfalls in den Schalenzwischenraum und läuft, wie das an der Innenseite ablaufende Spritzmittel in die Sammelrinne.

Eine vorteilhafte Ausführungsform gibt Anspruch 17 wieder. Die Absaugung sorgt dafür, daß die Luft aus dem Spritztunnel angesaugt wird und somit der Druckaufbau im Spritztunnel beeinflußt werden kann. Mit den Merkmalen des Anspruchs 18 ist es möglich, für beide Schalen jeder Seitenwand gleiche Bauteile zu verwenden. Zudem kann der Druck durch den Versatz der Perforation durch eine Art Labyrinth nach außen entlastet werden, während das Spritzmittel durch die Luftumlenkung aus der Luft abgeschieden wird und auf die Wandflächen prellt.

Die Wirksamkeit der Rückgewinnung des Spritzmittels wird bei den bekannten Geräten dadurch beeinträchtigt, daß sich das in der Sammelrinne aufgefangene Spritzmittel aufgrund der Bewegungen des Gerätes aufschaukelt und überschwappt.

Dies geschieht vor allem dann leicht, wenn der Ablauf oder ein vorgeschaltetes Sieb durch Blätter od. dgl. verstopfen und sich die Rinne füllt, bis die Verstopfung beseitigt ist. Mit der Ausbildung gemäß Anspruch 19 wird das Aufschaukeln des Spritzmittels in der Sammelrinne verhindert. Dabei können die Schottwände von Materialstreifen gebildet sein, in die die Rinne - gegebenenfalls austauschbareingelegt sind. Der Ursache für das Vollaufen der Sammelrinne, nämlich der Verstopfung von Ablauf, Ablaufsieben od. dgl., wird mit den Merkmalen des Anspruchs 21 vorgebeugt. Mit den Merkmalen des Anspruchs 22 wird das am häufigsten eintretende Überschwappen des aufgefangenen Spritzmittels an den Enden der Sammelrinne aufgrund der Schaukelbewegungen der Vorrichtung in Fahrtrichtung begegnet.

Das Problem des Überschwappens des Spritzmittels ergibt sich nicht nur aufgrund der Schaukelbewegungen beim Fahren, sondern in verstärktem Maß auch bei hängigem Gelände und vor allem bei wechselnder Hängigkeit. Hiermit ist insbesondere im Weinbau zu rechnen. Der Stand der Technik bietet hierfür keine Lösung. Dieses Problem wird mit den Merkmalen des Anspruchs 23 gelöst. Die Neigung von Seitenwand-Unterkante und Sammelrinne kann so gewählt werden, daß auch bei starker Geländeneigung stets gewährleistet ist, daß das Spritzmittel zum Pumpensumpf läuft und dort abgesaugt wird. Um bei vorgegebener Länge des Spritztunnels aufgrund der Neigung der Seitenwand-Unterkante am höchsten Punkt nicht zuviel Bodenabstand zu erhalten und damit Gefahr zu laufen, daß die Sammelrinne nicht vollständig unter der Belaubung liegt oder aber die unterste Düse zu hoch liegt, um z. B. den Pflanzenstamm zu erreichen, kann die Ausbildung gemäß Anspruch 24 vorgesehen sein. Diese läßt sich auch bei größer werdender Tunnellänge noch mit den Merkmalen des Anspruchs 25 verwirklichen. Mit den Merkmalen des Anspruchs 26 schließlich wird die Sammelrinne bis unterhalb der Laubwand bis nahe an den Stamm der Pflanze durch ein Auffangteil verbreitert, wobei dieser elastische Teil beim Anstoßen ausfedern kann.

Auch die Applikation des Spritzmittels bzw. dessen Regelmäßigkeit leidet aufgrund der Schaukelbewegungen des Gerätes während der Fahrt, da sich Stellung und Winkel der Spritzdüsen zur Pflanze verändern. Um dies zu vermeiden, muß die Fahrgeschwindigkeit soweit reduziert werden, um den Spritztunnel in möglichst gleichbleibender Lage über die Pflanzenreihe zu führen. Damit wird aber die Arbeitsleistung vermindert oder aber - ohne Reduzierung der Fahrgeschwindigkeit - das Spritzergebnis verschlechtert.

Dieses Teilproblem wird mit den Merkmalen des Anspruchs 27 behoben, indem beim Aufschaukeln des Gerätes die Stützen Bodenkontakt bekommen und die Schaukelbewegung aufgrund deren Nachgiebigkeit gedämpft, zugleich aber auch ein zu hartes Aufschlagen vermieden wird. Auf der anderen Seite ist gewährleistet, daß das Gerät bei ruhiger Fahrt und geringen Bodenunebenheiten keinen Bodenkontakt erhält und eine unnötige Bodenverdichtung vermieden wird.

Vorzugsweise ist die Bodenstütze von einem Rad gebildet, für dessen Anordnung die Ansprüche 29 bis

3

EP 0 361 070 B1

31 vorteilhafte Ausführungsbeispiele kennzeichnen. Um die Dämpfungskräfte nicht unmittelbar an den Seitenwänden des Spritztunnels aufzunehmen, ist die Ausführungsform gemäß Anspruch 32 vorgesehen, bei der die Kräfte unmittelbar in die Tragkonstruktion des Tunnels eingeleitet werden. Weitere vorteilhafte Ausführungsformen kennzeichnen die Ansprüche 33 bis 35.

In Verbindung mit dem sich nach innen erweiternden Tunnel sind die verschiedenen Verstellmöglichkeiten der Düsenrohre gemäß den Ansprüchen 36 bis 40 von besonderer Bedeutung, wie dies eingangs bereits angedeutet worden ist. Dabei kann der gemäß Anspruch 39 und 40 vorgesehene verstellbare Abschnitt an einem oder beiden Rohrenden angeordnet sein, um die an ihm befindliche Düse mehr von oben oder von unten gegen die Pflanze zu richten. Zu diesem Zweck kann der Abschnitt beispielsweise aus einem flexiblen schlauchartigen Rohrstück bestehen. Anspruch 40 gewährleistet, daß beim Stammspritzen die entsprechende Düse nur dann Spritzmittel abgibt, wenn sich die Düse im Bereich eines Stamms befindet.

Nachfolgend ist die Erfindung anhand einiger in der Zeichnung wiedergegebener Ausführungsbeispiele beschrieben. In der Zeichnung zeigen:

Figur 1 eine schematisch dargestellte Ansicht der erfindungsgemäßen Vorrichtung in Fahrtrichtung gesehen;

Figur 2 einen Schnitt II - II gemäß Figur 1 in einer ersten Ausführungsform des Spritztunnels;

Figur 3 - 5 eine der Figur 2 entsprechende schematische Darstellung weiterer Ausführungsformen des Spritztunnels;

Figur 6 eine der Figur 2 entsprechende Ansicht eines längenveränderlichen Spritztunnels;

Figur 7 eine der Figur 2 entsprechende Darstellung eines Spritztunnels mit Luftleiteinrichtung;

Figur 8 eine der Figur 7 entsprechende Darstellung mit zwei abgewandelten Ausführungsformen der Luftleiteinrichtung;

Figur 9 - 11 je eine Ansicht auf die Innenseite der Seitenwand mit verschiedener Ausbildung ihrer Unterkante und der Sammelrinne;

Figur 12 eine der Figur 1 entsprechende Ansicht eines einzelnen Spritztunnels in einer abgewandelten Ausführungsform;

Figur 13 eine der Figur 12 entsprechende Ansicht eines Spritztunnels mit Bodenabstützung;

Figur 14, 15 eine Ansicht der Seitenwand mit zwei Ausführungsformen der Bodenstütze;

Figur 16, 17 eine detaillierte Seitenansicht zweier Ausführungsbeispiele der Bodenstütze und

Figur 18, 19 je eine perspektivische Ansicht einer Ausführungsform der Sammelrinne im Bereich der Unterkante der Seitenwand des Spritztunnels.

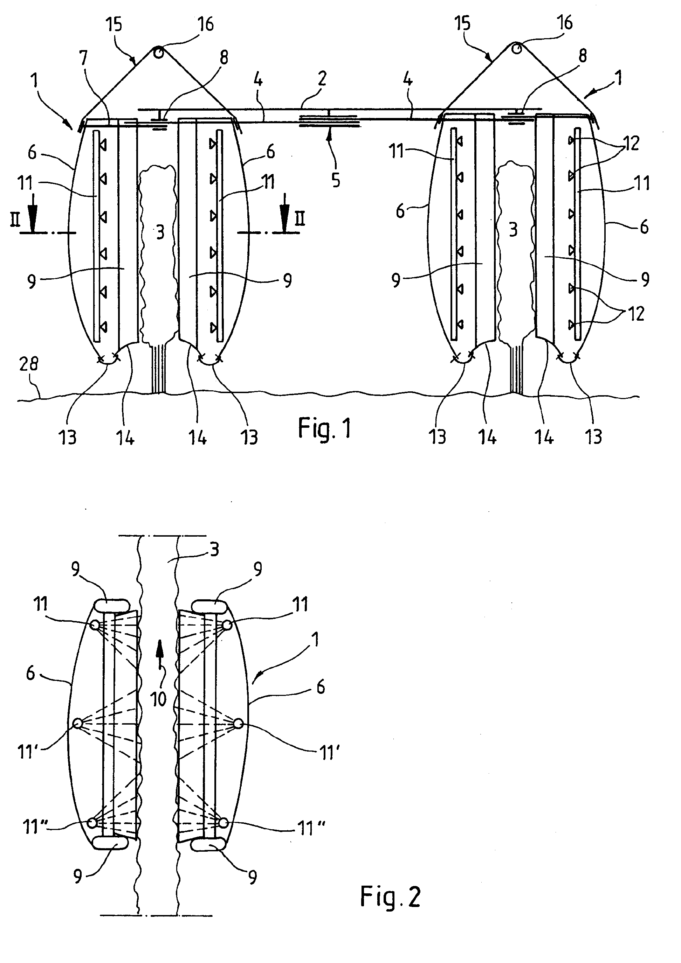

In Figur 1 ist ein Ausführungsbeispiel mit zwei Spritztunneln 1 wiedergegeben, die über eine Traverse 2 an einem Zugfahrzeug, z. B. am Dreipunkt eines Schleppers, oder auf einem gezogenen Anhänger angeordnet sind. Die beiden Spritztunnel 1 übergreifen zwei benachbarte Pflanzenreihen 3 einer Reihenkultur. Zur Einstellung der Spritztunnel 1 auf den Abstand der Pflanzenreihen 3 sitzt jeder Spritztunnel 1 an einem Träger 4, die gegeneinander verstellbar sind. Dies ist schematisch mit einer an der Traverse 2 angeordneten Schiebeführung 5 dargestellt.

Jeder Spritztunnel 1 weist zwei gegenüberliegende Seitenwände 6 auf, die wiederum gegeneinander verschiebbar sind, um die lichte Weite des Spritztunnels einstellen zu können. Zu diesem Zweck ist beispielsweise die äußere Seitenwand über ein Tragprofil 7 gegenüber dem die Innenwand tragenden Träger 4 verschiebbar, wie dies bei 8 wiederum mit einer Schiebeführung angedeutet ist. Die Verstellung der Seitenwände 6 eines Spritztunnels, sowie die Verstellung beider Spritztunnel gegeneinander kann natürlich auch durch beliebige andere Führungen verwirklicht sein. Am vorderen und hinteren Ende der Seitenwände 6 ist je ein elastischer Abschlußstreifen 9 (Figur 2) angeordnet, der über die Höhe der Seitenwände reicht und aus einem extrem flexiblen Material besteht. Er kann beispielsweise aus einem elastischen Materialstreifen, einem schlauchartigen Gebilde, aus einzelnen horizontal angeordneten Gummilappen, einem Borstenstreifen od. dgl. gebildet sein. Dieser elastische Abschlußstreifen 9 liegt bei Bewegung des Spritztunnels 1 in Fahrtrichtung 10 der äußeren Begrenzung der Pflanzenreihe 3 an und schließt somit den Tunnel-Innenraum an beiden Enden ab.

In dem in Fahrtrichtung 10 vorderen Bereich des Spritztunnels 1 sind im wesentlichen senkrecht verlaufende Düsenrohre 11 angeordnet, die, wie aus Figur 1 ersichtlich, eine Vielzahl übereinander befindlicher Spritzdüsen 12 aufweisen. Der Abstand und der Spritzwinkel der Düsen 12 ist so gewählt, daß sich die Spritzkegel etwa im Bereich der Außenseite der Pflanzenreihe 3 überlappen. Bei der Anordnung der Düsenrohre 11 im vorderen Bereich des Spritztunnels sind die Düsen, wie aus Figur 2 ersichtlich, entgegen der Fahrtrichtung nach hinten geneigt.

Entlang der Unterkante der Seitenwände 6 sind Sammelrinnen 13 befestigt, die das an den Seitenwänden innenseitig ablaufende Spritzmittel auffangen. Mittels einer Sumpfpumpe wird das aufgefangene Spritzmittel in den nicht gezeigten Spritzmittelbehälter zurückgeführt. Um auch das von den Pflanzen nach unten abtropfende Spritzmittel aufzufangen, ist an jeder Sammelrinne 13 ein nach innen ragender elastischer Materialstrei-

4

fen 14 angebracht, der bis unterhalb der Pflanze reicht und das Spritzmittel in die Sammelrinne 13 ableitet.

Um einen dichten Abschluß des Spritztunnels 1 auch nach oben zu erhalten, kann eine flexible Abdeckung 15 vorgesehen sein, die den Verstellbewegungen der Seitenwände 6 des Spritztunnels 1 folgt. Beim gezeigten Ausführungsbeispiel ist die Abdeckung 15 dachförmig ausgebildet und besteht aus schlaffen Materialbahnen, die bei 16 aufgehängt sind.

Die Seitenwände 6 des Spritztunnels sind, wie aus Figur 1 ersichtlich, in der Vertikalebene konvex gekrümmt, wie dies an sich bekannt ist. Darüber hinaus sind sie aber auch in einer Horizontalebene, wie Figur 2 zeigt, konvex gekrümmt. Hierdurch erweitert sich die lichte Weite des Spritztunnels von den Enden der Seitenwände her bis in den mittleren Bereich. Dies gibt die Möglichkeit, die Düsenrohre 11 abstandsveränderlich zu den Pflanzenreihen 3 anzuordnen, wie dies beispielsweise mit einer mittleren Stellung 11″ angedeutet ist. Auch kann die Winkellage des Spritzstrahls bezüglich der Pflanzenreihe 3 variiert werden. Schließlich ist es auch möglich, die Düsenrohre 11, wie bei 11″ angedeutet, an das in Fahrtrichtung hintere Ende des Spritztunnels zu verlagern, wobei dann die Düsenrohre in Fahrtrichtung angestellt werden.

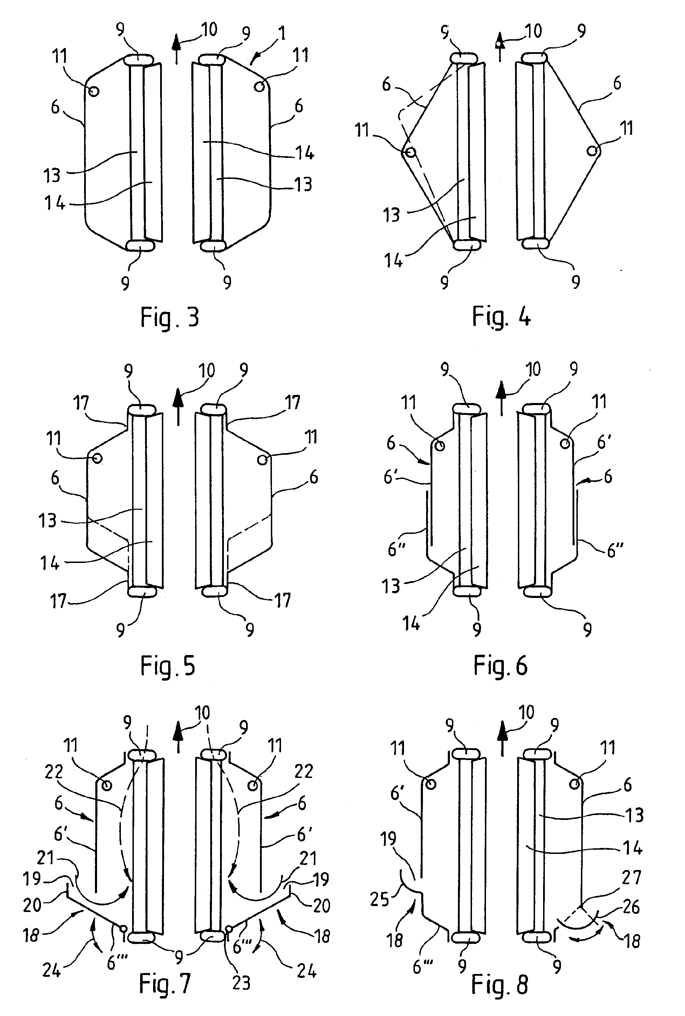

In Figur 3 ist eine gegenüber Figur 2 abgewandelte Ausführungsform dargestellt, bei der die Seitenwände 6 im Horizontalschnitt trapezförmig ausgebildet sind, so daß auch hier eine Vergrößerung der lichten Weite des Spritztunnels erreicht wird. Bei der weiteren Ausführungsform gemäß Figur 4 sind die Seitenwände 6 im Horizontalschnitt dreiecksförmig ausgebildet, wobei hier die Düsenrohre 11 vorzugsweise im Bereich des Eckwinkels angeordnet sind. Figur 5 zeigt ein Ausführungsbeispiel mit wiederum trapezförmig angeordneten Seitenwänden 6, die jedoch mit senkrechten Flanschen 17 zur Stabilisierung und zur Aufnahme der Abschlußstreifen 19 versehen sind. Die Trapezform der Seitenwände 6 kann auch asymmetrisch sein, wie dies in Figur 5 mit gestrichelter Linie angedeutet ist. Ebenso kann auch die dreiecksförmige Ausbildung gemäß Figur 4, wie gestrichelt angedeutet, asymmetrisch sein.

Um die Tunnellänge variieren zu können, können die Seitenwände 6, wie in Figur 6 gezeigt, aus zwei in Fahrtrichtung 10 hintereinander angeordneten Wandabschnitten 6′ und 6″ bestehen, die parallel zur Fahrtrichtung teleskopierbar oder in anderer Weise verschiebbar sind. Jedes der beiden Seitenwand-Abschnitte 6′, 6″ nimmt an seinem Ende je einen Abschlußstreifen 9 auf.

In den Figuren 7 und 8 sind Ausführungsbeispiele für Luftleiteinrichtungen 18 gezeigt. Bei der Ausführungsform gemäß Figur 7 wird die Luftleiteinrichtung 18 dadurch gebildet, daß die Seitenwand 6 aus zwei Wandabschnitten 6′ und 6‴ gebildet ist, die an ihren Enden jeweils wiederum den flexiblen Abschlußstreifen 9 aufnehmen. Der rückwärtige Abschnitt 6‴ verläuft mit Abstand von der rückwärtigen Kante des Seitenwand-Abschnittes 6′, so daß ein Lufteintrittsspalt 19 gebildet wird. Ferner ist der Seitenwand-Abschnitt 6‴ an seinem äußeren Ende 20 nach vorne gebogen, um den mit Richtungspfeil 21 angedeuteten Fahrtwind, gegebenenfalls auch einen in der gleichen Richtung wirkenden atmosphärischen Wind in den Spritztunnel umzulenken und die aufgrund des Fahrtwindes innerhalb des Spritztunnels herrschende Luftbewegung, die gestrichelt mit 22 angedeutet ist, aufzustauen und/oder zu verwirbeln und auf diese Weise den Spritznebel innerhalb des Spritztunnels zu halten. Um den Eintrittsspalt 19 und den Umlenkungswinkel der Luft zu variieren, kann der Seitenwand-Abschnitt 6‴ an einer vertikalen Achse 23 schwenkbar gelagert sein, so daß er gemäß Doppelpfeil 24 verschwenkbar ist.

Bei dem in Figur 8 links wiedergegebenen Ausführungsbeispiel besteht die Seitenwand 6 wiederum aus einem vorderen Abschnitt 6′ und einem hinteren Abschnitt 6‴. Die Luftleiteinrichtung 18 wird durch entsprechende Ausformung 25 der Vorderkante des hinteren Wandabschnittes 6‴ gebildet. Bei der in Figur 8 rechts wiedergegebenen Ausführungsform ist am hinteren Ende der Seitenwand 6 eine Luftleiteinrichtung 18 in Form eines gekrümmten Leitblechs 26 angeordnet, das einerseits die Seitenwand 6 nach außen überragt, andererseits in den Spritztunnel hineinragt. Das Leitblech 26 kann bei 27 schwenkbar aufgehängt sein, um Luftmenge und Umlenkwinkel beeinflussen zu können.

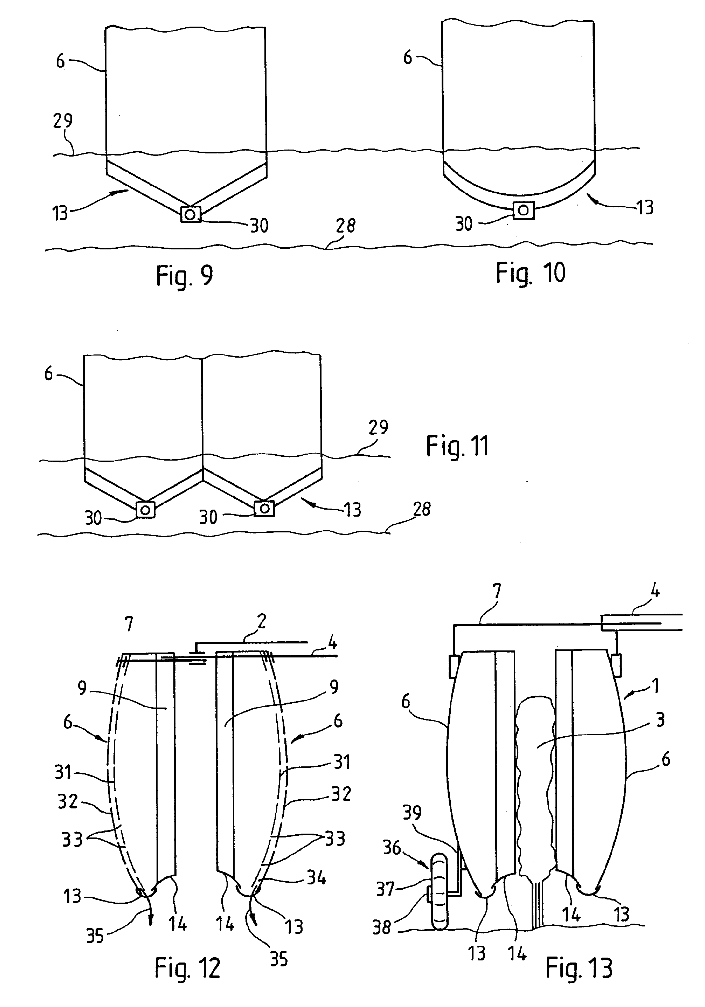

Die Figuren 9 bis 11 zeigen jeweils eine Ansicht auf die Innenseite einer Seitenwand 6. Dabei ist mit der Linie 28 das Bodenniveau und mit der Linie 29 die untere Begrenzung der Belaubung der Pflanzenreihe angedeutet. Bei diesen Ausführungsbeispielen sind jeweils die Unterkante der Seitenwand 6 und die Sammelrinne 13 mit dem nicht gezeigten elastischen Streifen 14 gegenüber der Horizontalen geneigt angeordnet. Beim Ausführungsbeispiel gemäß Figur 9 sind die Unterkante und die Sammelrinne 13 zur Längsmittelachse der Seitenwand 6 linear geneigt und weisen am tiefsten Punkt einen Pumpensumpf 30 auf. Bei dem Ausführungsbeispiel gemäß Figur 10 sind Unterkante und Sammelrinne 13 kreisförmig oder in ähnlicher Weise gekrümmt und es ist wiederum am tiefsten Punkt der Pumpensumpf 30 angeordnet. Bei größerer Länge des Spritztunnels empfiehlt es sich, die Unterkante der Seitenwand und die Sammelrinne 13 in mehrfachen Abschnitten gegeneinander geneigt auszubilden, um bei niedriger Bauhöhe über Bodenniveau 28 dennoch ein einwandfreies Ableiten des Spritzmittels auch in geneigter Lage der Seitenwände 6 zu erhalten. Ein Ausführungsbeispiel hierfür ist in Figur 11 gezeigt.

Figur 12 zeigt ein Ausführungsbeispiel, bei dem die Seitenwände 6 aus zwei parallelen Schalen 31, 32 gebildet werden, von denen zumindest die innere Schale 31 mit einer Perforation 33 versehen ist. Beim gezeigten Ausführungsbeispiel weist auch die äußere Schale 32 eine solche Perforation auf, wobei die Perforationen gegeneinander versetzt sind. Diese Ausführungsform empfiehlt sich insbesondere, wenn das Spritzmittel in Form eines Aerosols unter hohem Druck in den Tunnel eingesprüht wird. Die Perforation sorgt für eine Druckentlastung im Innenraum, während das Spritzmittel entweder an der inneren Schale 31 aufgefangen und nach unten in die Sammelrinne 13 geleitet wird oder im Schalenzwischenraum 34 nach unten abgeführt wird. Der Druckabbau kann noch dadurch gefördert werden, daß die Luft an der Unterkante des Schalenzwischenraums 34, wie mit den Pfeilen 35 angedeutet, abgesaugt wird.

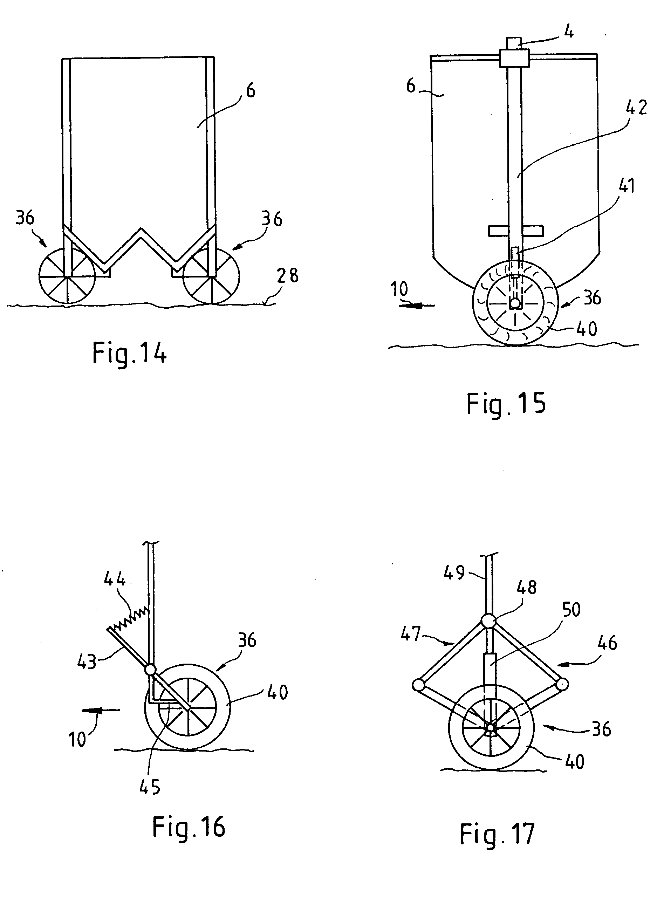

Figur 13 zeigt ein Ausführungsbeispiel der Vorrichtung zur Vermeidung zu starker Schaukel- und Kippbewegungen des Spritztunnels. Zu diesem Zweck ist an zumindest einem Spritztunnel 1 eine Bodenstütze 36 angebracht, die bei Überschreiten des noch zulässigen Kippwinkels Bodenkontakt erhält. Bei dem Ausführungsbeispiel gemäß Figur 13 ist die Bodenstütze 36 an der äußeren Seitenwand 6 im Bereich deren Unterkante angeordnet. Sie ist als Rad 37 ausgebildet, das an der Achse 38 gelagert und über eine nachgiebige Stütze 39 an der Seitenwand 6 angebracht ist. Eine gleiche Bodenstütze kann an dem anderen Spritztunnel außenseitig angebracht sein. Ferner können, wie aus Figur 14 ersichtlich, je eine Bodenstütze im Bereich der vorderen und der hinteren Kante der Seitenwand 6 angeordnet sein, um auch bei kurzwelligen Bodenunebenheiten ein zu starkes Kippen der Seitenwand 6 zu verhindern.

Figur 15 zeigt ein Ausführungsbeispiel einer Bodenstütze 36 in Form eines luftbereiften Rades 40, das über einen Stoßdämpfer 41 an einem Tragprofil 42 abgestützt ist, das wiederum nach oben geführt und an der Traverse 4 befestigt ist, so daß die Dämpfungskräfte von der Traverse 4 aufgenommen werden.

Figur 16 zeigt eine Bodenstütze 36 mit einem luftbereiften Rad 40, das an dem einen Ende eines Schwenkhebels 43 gelagert ist und unter Wirkung einer am anderen Ende des Schwenkhebels 43 angreifenden Zugfeder 44 gegen einen Anschlag 45 anliegt. Beim Aufsetzen des Rades 40 gibt dieses unter Aufziehen der Zugfeder 44 elastisch nach. Bei dem Ausführungsbeispiel gemäß Figur 17 sitzt das die Bodenstütze 36 bildende Rad 40 an einem doppelten Kniehebel-Getriebe 46, 47, das bei 48 an einem Tragprofil 49 abgestützt ist und dessen Einknickung durch einen diagonal angeordneten Stoßdämpfer 50 gedämpft wird.

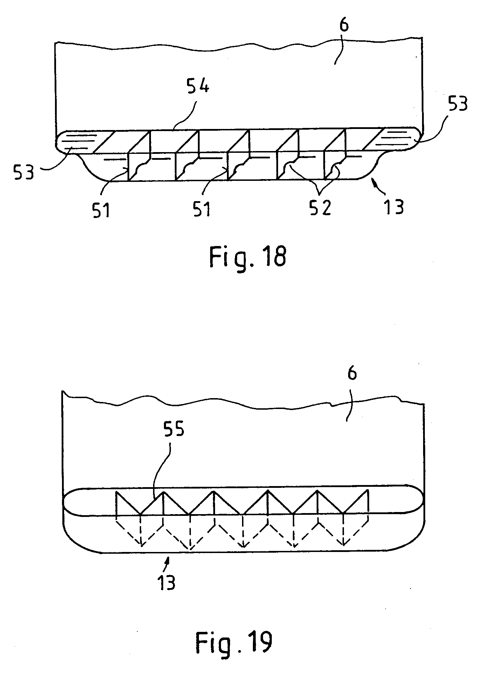

In Figur 18 und 19 sind zwei Ausführungsformen für die Sammelrinne gezeigt. Bei dem Ausführungsbeispiel gemäß Figur 18 sind in die Sammelrinne 13 mehrere Schottwände 51 quer zur Längserstreckung der Sammelrinne und parallel zueinander in die Sammelrinne eingesetzt. Sie weisen im Bereich ihrer Unterkante Durchtrittsöffnungen 52 für das aufgefangene Spritzmittel auf. Im Bereich der Enden der Sammelrinne sind Abdeckungen 53 angeordnet, die vor allem ein Ausschwappen des Spritzmittels nach vorne oder hinten verhindern. Die Abdeckung 53 kann auch über die gesamte Länge der Sammelrinne reichen und gegebenenfalls einen Spalt zwischen Seitenwand und der ihr nahe liegenden Kante der Abdeckung freilassen. Ebenso kann die Oberseite 54 durch ein Lochblech abgedeckt sein.

Bei dem Ausführungsbeispiel gemäß Figur 19 sind die Schottwände von einem in die Sammelrinne 13 zickzackförmig eingelegten Materialstreifen 15 gebildet, der gegebenenfalls austauschbar ist.

## Patentansprüche

1. Vorrichtung zum Spritzen von Reihenkulturen mit einem von einem Fahrzeug, einem Anhänger od. dgl. aufgenommenen Spritzmittelbehälter und wenigstens einem eine Pflanzenreihe übergreifenden Spritztunnel (1) mit beiderseits der Pflanzenreihe (3) abstandsveränderlich angeordneten Seitenwänden (6), entlang deren Unterkante je eine Sammelrinne (13) zum Auffangen und Rückgewinnen von überschüssigem Spritzmittel angeordnet ist, und mit innerhalb des Spritztunnels (1) im wesentlichen senkrecht verlaufenden Düsenrohren (11), wobei die Tunnelweite an dem in Fahrtrichtung vorderen und hinteren Ende des Spritztunnels (1) etwa der Pflanzenbreite entspricht, dadurch gekennzeichnet, daß sich die Tunnelweite vom vorderen Ende ausgehend bis zu einem größten Abstand der Seitenwände (6) erweitert und danach zum hinteren Ende wieder verengt.

2. Vorrichtung nach Anspruch 1, dadurch gekennzeichnet, daß die Tunnelweite entlang der Unterkante, gegebenenfalls auch der Oberkante, über die Länge des Spritztunnels (1) konstant ist.

3. Vorrichtung nach Anspruch 1 oder 2, dadurch gekennzeichnet, daß die Seitenwände (6) in einer kontinuierlichen Raumkurve konvex gewölbt sind.

4. Vorrichtung nach Anspruch 1 oder 2, dadurch gekennzeichnet, daß die Seitenwände (6) in einem Horizontalschnitt als nach innen offenes Trapez ausgebildet sind.

5. Vorrichtung nach Anspruch 1 oder 2, dadurch gekennzeichnet, daß die Seitenwände (6) in einem Horizontalschnitt als nach innen offenes Dreieck ausgebildet sind.

6. Vorrichtung nach einem der vorangehenden Ansprüche, dadurch gekennzeichnet, daß die Seitenwände (6) zumindest im Bereich vor dem hinteren Ende wenigstens eine gegen die Fahrtrichtung (10) angestellte, den Fahrtwind in den Spritztunnel (1) und im wesentlichen quer zur Fahrtrichtung umlenkende Leiteinrichtung (18) aufweisen.

7. Vorrichtung nach Anspruch 6, dadurch gekennzeichnet, daß die Leiteinrichtung (18) aus einem an jeder Seitenwand (6) sich etwa über deren Höhe erstreckenden Lufteintrittsspalt (19) und einer die Seitenwand (6) nach außen überragenden und den Lufteintrittsspalt (19) in Fahrtrichtung nach hinten begrenzenden Leitfläche (26) gebildet ist.

8. Vorrichtung nach Anspruch 7, dadurch gekennzeichnet, daß der Lufteintrittsspalt (18) von der hinteren Kante der Seitenwand (6) einerseits und der dahinter angeordneten Leitfläche (26) andererseits gebildet ist.

9. Vorrichtung nach Anspruch 7, dadurch gekennzeichnet, daß jede Seitenwand (6) aus zwei hintereinander angeordneten Seitenwandteilen (6', 6''') besteht, die den Lufteintrittsspalt (19) bilden und von denen das hintere Seitenwandteil (6''') an seiner vorderen Kante die Leitfläche (26) aufweist.

10. Vorrichtung nach Anspruch 9, dadurch gekennzeichnet, daß die Leitfläche (26) durch entsprechende Formgebung des hinteren Seitenwandteils (6''') im Bereich dessen vorderer Kante gebildet ist.

11. Vorrichtung nach einem der Ansprüche 9 bis 10, dadurch gekennzeichnet, daß die Breite des Lufteintrittsspaltes (18) veränderbar ist.

12. Vorrichtung nach einem der Ansprüche 7 bis 11, dadurch gekennzeichnet, daß der Anstellwinkel der Leitfläche (26) veränderbar ist.

13. Vorrichtung nach einem der vorangehenden Ansprüche, dadurch gekennzeichnet, daß jede Seitenwand (6) aus zwei Seitenwandabschnitten (6', 6'') besteht, die zur Variation der Länge des Spritztunnels (1) relativ zueinander beweglich sind.

14. Vorrichtung nach einem der Ansprüche 1 bis 13, dadurch gekennzeichnet, daß die Seitenwandabschnitte (6', 6'') in Fahrtrichtung (10) teleskopierbar sind.

15. Vorrichtung nach einem der Ansprüche 1 bis 13, dadurch gekennzeichnet, daß die Seitenwandabschnitte (6', 6'') über Parallelogrammlenker verbunden sind.

16. Vorrichtung nach einem der vorangehenden Ansprüche, dadurch gekennzeichnet, daß jede Seitenwand (6) aus zwei im wesentlichen parallelen nebeneinander angeordneten Schalen (31, 32) besteht, von denen zumindest die innere Schale (31) für den Durchtritt des Spritzmittels in den Schalen-Zwischenraum (34) perforiert ist.

17. Vorrichtung nach Anspruch 16, dadurch gekennzeichnet, daß der Schalen-Zwischenraum (34) im unteren Bereich an eine Absaugpumpe angeschlossen ist.

18. Vorrichtung nach Anspruch 16 oder 17, dadurch gekennzeichnet, daß die äußere Schale (32) gleichfalls perforiert ist, und daß die Perforationen (33) von innerer und äußerer Schale (31, 32) gegeneinander versetzt sind.

19. Vorrichtung nach einem der vorangehenden Ansprüche, dadurch gekennzeichnet, daß die entlang der Unterkante der Seitenwände (6) angeordnete Sammelrinne (13) quer zu ihrer Längserstreckung angeordnete Schottwände (51) aufweist, die Durchtritte (52) für das aufgefangene Spritzmittel aufweisen.

20. Vorrichtung nach Anspruch 19, dadurch gekennzeichnet, daß die Schottwände von in die Sammelrinne (13) lose eingelegten Materialstreifen (55) gebildet sind.

21. Vorrichtung nach einem der Ansprüche 1 bis 20, dadurch gekennzeichnet, daß die Sammelrinne (13) durch ein Lochblech abgedeckt ist.

22. Vorrichtung nach einem der Ansprüche 1 bis 21, dadurch gekennzeichnet, daß die Sammelrine (13), zumindest im Bereich ihrer beiden Enden mit einer geschlossenen Abdeckung (53) versehen ist.

23. Vorrichtung nach einem der vorangehenden Ansprüche, dadurch gekennzeichnet, daß die Seitenwände (6) an ihrer Unterkante und die Sammelrinne (13) in der Vertikalebene geneigt verlaufen und daß am tiefsten Punkt ein Pumpensumpf (30) für eine das aufgefangene Spritzmittel in den Spritzmittelbehälter fördernde Pumpe angeordnet ist.

24. Vorrichtung nach Anspruch 23, dadurch gekennzeichnet, daß die Unterkante jeder Seitenwand (6) und die Sammelrinne (13) vom vorderen und hinteren Ende ausgehend zur Mitte hin geneigt sind und daß der Pumpensumpf (30) in der Mitte der Seitenwand angeordnet ist.

25. Vorrichtung nach einem der Ansprüche 23 bis 24, dadurch gekennzeichnet, daß die Unterkante jeder Seitenwand (6) und die Sammelrinne (13) aus mehreren gegeneinander geneigten Abschnitten gebildet ist, wobei je zwei gegeneinander geneigten Abschnitten ein Pumpensumpf (30) zugeordnet ist.

26. Vorrichtung nach einem der Ansprüche 1 bis 25, dadurch gekennzeichnet, daß die Sammelrinne (13) starr ausgebildet ist und eine ihre der Pflanzenreihe (3) zugekehrte Längskante überragende Auffangleiste (14) aus flexiblem Material aufweist.

27. Vorrichtung nach einem der vorangehenden Ansprüche, dadurch gekennzeichnet, daß der Spritztunnel (1) in vertikaler Richtung nachgiebige Bodenstützen (36) aufweist, die bei Überschreiten eines bestimmten Schwenkwinkels des Spritztunnels gegenüber der Pflanzenreihe (3) bei Schaukelbewegungen in einer zur Fahrtrichtung parallelen oder dazu senkrechten Richtung Bodenkontakt erhalten.

28. Vorrichtung nach Anspruch 27, dadurch gekennzeichnet, daß die Bodenstütze (36) von wenigstens einem am Spritztunnel (1) angeordneten Rad (37) gebildet ist.

29. Vorrichtung nach Anspruch 28, dadurch gekennzeichnet, daß das Rad (37, 40) an Federbeinen (43) gelagert ist.

30. Vorrichtung nach einem der Ansprüche 28 bis 29, dadurch gekennzeichnet, daß das Rad (37, 40) an der außen liegenden Seitenwand (6) des Spritztunnels (1) angeordnet ist.

31. Vorrichtung nach einem der Ansprüche 28 bis 30, dadurch gekennzeichnet, daß das Rad (37, 40) an der Seitenwand (6) in deren unteren Bereich angebracht ist.

32. Vorrichtung nach einem der Ansprüche 28 bis 31, dadurch gekennzeichnet, daß das Rad (37, 40) über eine Stütze (42) an einem oberen Tragteil (4) des Spritztunnels (1), z. B. einer die Seitenwände (6) verbindenden Traverse (4), angebracht ist.

33. Vorrichtung nach einem der Ansprüche 1 bis 32, dadurch gekennzeichnet, daß je ein Rad am vorderen und hinteren Ende der Seitenwand (6) angebracht ist.

34. Vorrichtung nach einem der Ansprüche 1 bis 33 mit je einem Spritztunnel für benachbarte Pflanzenreihen, dadurch gekennzeichnet, daß jeder Spritztunnel (1) wenigstens eine Bodenstütze (36) aufweist.

35. Vorrichtung nach einem der Ansprüche 28 bis 34, dadurch gekennzeichnet, daß das Rad (37, 40) gummi-, gegebenenfalls luftbereift ist und einen großen Durchmesser aufweist.

36. Vorrichtung nach einem der Ansprüche 1 bis 35, dadurch gekennzeichnet, daß jeder Seitenwand (6) ein Düsenrohr (11) zugeordnet ist und daß die Düsenrohre (11) um ihre Achse drehbar sind.

37. Vorrichtung nach Anspruch 36, dadurch gekennzeichnet, daß jedes Düsenrohr (11) zumindest zwischen dem vorderen Ende und dem mittleren Bereich der Seitenwand (6) verstellbar ist.

38. Vorrichtung nach einem der Ansprüche 36 bis 37, dadurch gekennzeichnet, daß jedes Düsenrohr (11) bezüglich der Pflanzenreihe (3) abstandsveränderlich angeordnet ist.

39. Vorrichtung nach einem der Ansprüche 36 bis 38, dadurch gekennzeichnet, daß jedes Düsenrohr (11) wenigstens einen, vorzugsweise an wenigstens einem Rohrende angeordneten und vorzugsweise flexiblen Abschnitt mit wenigstens einer Düse aufweist, der zur Änderung des Spritzwinkels der an ihm angeordneten Düse gegenüber den anderen Düsen (12) an dem Düsenrohr (11) verstellbar ist.

40. Vorrichtung nach Anspruch 39, dadurch gekennzeichnet, daß für das Spritzen des Pflanzenstamms in dem verstellbaren Abschnitt am unteren Rohrende ein Ventil angeordnet ist, das von einem Signalgeber in Offenstellung steuerbar ist, und daß der Signalgeber mit dem Stamm jeder Pflanze zusammenwirkt.

## Claims

1. Apparatus for spraying row cultures with a spray medium container received by a vehicle, a trailer or the like, and at least one spray tunnel (1) passing over a plant row and with side walls (6) arranged in space-variable manner on either side of the plant row (3) and along whose lower edge is in each case provided a collecting channel (13) for collecting and recovering excess spray medium, and with nozzle tubes positioned substantially vertically within the spray tunnel (11), the tunnel width corresponding to approximately the plant width at the front and rear end of the spray tunnel (1) in the direction of travel, characterized in that the tunnel width widens from the front end to a maximum spacing of the side walls (6) and then tapers again towards the rear end.

2. Apparatus according to claim 1, characterized in that the tunnel width is constant along the lower edge and optionally also the upper edge over the entire length of the spray tunnel (1).

3. Apparatus according to claims 1 or 2, characterized in that the side walls (6) have a convex curvature in a continuous space curve.

4. Apparatus according to one of the claims 1 or 2, characterized in that in a cross-section the side walls (6) are constructed as an inwardly open trapezium.

5. Apparatus according to claims 1 or 2, characterized in that, in a cross-section, the side walls (6) are constructed as an inwardly open triangle.

6. Apparatus according to one of the preceding claims, characterized in that, at least in the area upstream of the rear end, the side walls (6) have at least one guide mechanism (18) set against the direction of travel (10) and deflecting the air stream in the spray tunnel (1) substantially at right angles to the direction of travel.

7. Apparatus according to claim 6, characterized in that the guide mechanism (18) is formed by an air entrance gap (19) on each side wall (6) and extending roughly over the height thereof and a guide surface (26) outwardly projecting over the side walls (6) and rearwardly limiting the air entrance gap (13) in the direction of travel.

8. Apparatus according to claim 7, characterized in that the air entrance gap (19) is formed by the rear edge of the side walls (6) on the one hand and the guide surface (26) behind it on the other.

9. Apparatus according to claim 7, characterized in that each side wall (6) comprises two successively arranged side wall parts (6', 6'''), which form the air entrance gap (19) and whereof the rear side wall part (6''') has the guide surface (26) at its front edge.

10. Apparatus according to claim 9, characterized in that the guide surface (26) is formed by a corresponding shaping of the rear side wall part (6''') in the vicinity of its front edge.

11. Apparatus according to one of the claims 9 or 10, characterized in that the width of the air entrance gap (19) is variable.

12. Apparatus according to one of the claims 7 to 11, characterized in that the setting angle of the guide surface (26) is variable.

13. Apparatus according to one of the preceding claims, characterized in that each side wall (6) comprises two side wall portions (6', 6''), which are movable relative to one another for varying the length of the spray tunnel (1).

14. Apparatus according to one of the claims 1 to 13, characterized in that the side wall portions (6', 6'') are telescopable in the travel direction (10).

15. Apparatus according to one of the claims 1 to 13, characterized in that the side wall portions (6', 6'') are connected by means of parallelogram guides.

16. Apparatus according to one of the preceding claims, characterized in that each side wall (6) comprises two substantially parallel juxtaposed shells (31, 32), whereof at least the inner shell (31) is perforated for the passage of the spray medium into the shell gap (34).

17. Apparatus according to claim 16, characterized in that the shell gap (34) is connected to a suction pump in the lower area.

18. Apparatus according to claims 16 or 17, characterized in that the outer shell (32) is also perforated and that the perforations (33) of the inner and outer shells (31, 32) are reciprocally displaced.

19. Apparatus according to one of the preceding claims, characterized in that the collecting channel (13) located along the lower edge of the side walls (6) has bulkhead partitions (51) arranged at right angles to the longitudinal extension thereof and which have passages (52) for the collected spray medium.

20. Apparatus according to claim 19, characterized in that the bulkhead partitions are formed by material strips (55) loosely placed in the collecting channel (13).

21. Apparatus according to one of the claims 1 to 20, characterized in that the collecting channel (13) is covered by a perforated plate.

22. Apparatus according to one of the claims 1 to 21, characterized in that the collecting channel (13), at least in the vicinity of its two ends, is provided with a closed cover (53).

23. Apparatus according to one of the preceding claims, characterized in that the side walls (6) at their lower edge and the collecting channel (13) in the vertical plane are inclined and at the lowest point is provided a sump (30) for a pump delivering the collected spray medium into the spray medium container.

24. Apparatus according to claim 23, characterized in that the lower edge of each side wall (6) and the collecting channel (13) are inclined from the front and rear ends to the centre and that the sump (30) is located in the centre of the side wall.

25. Apparatus according to one of the claims 23 or 24, characterized in that the lower edge of each side wall (6) and the collecting channel (13) is formed frrom several oppositely inclined portions and with in each case a pair of such portions is associated a sump (30).

26. Apparatus according to one of the claims 1 to 25, characterized in that the collecting channel (13) is rigid and a collecting ledge (14) projecting over its longitudinal edge facing the plant row (3) is made from flexible material.

27. Apparatus according to one of the preceding claims, characterized in that the spray tunnel (1) has resilient bottom supports (36) in the vertical direction and on exceeding a given pivot angle of the spray tunnel with respect to the plant row (3) in the case of rocking movements are given a bottom contact in a direction parallel or at right angles to the travel direction.

28. Apparatus according to claim 27, characterized in that the bottom support (36) is formed by at least one wheel (37) located on the spray tunnel (1).

29. Apparatus according to claim 28, characterized in that the wheel (37, 40) is mounted on spring legs (43).

30. Apparatus according to one of the claims 28 or 29, characterized in that the wheel (37, 40) is located on the outer side wall (6) of the spray tunnel (1).

31. Apparatus according to one of the claims 28 to 30, characterized in that the wheel (37, 40) is fitted to the side walls (6) in its lower region.

32. Apparatus according to one of the claims 28 to 31, characterized in that the wheel (37, 40) is fitted by means of a support (42) to an upper carrying part (4) of the spray tunnel (1), e.g. a crossmember (4) linking the side walls (6).

33. Apparatus according to one of the claims 1 to 32, characterized in that in each case one wheel is fitted to the front and rear ends of the side walls (6).

34. Apparatus according to one of the claims 1 to 33 with in each case a spray tunnel for adjacent plant rows, characterized in that each spray tunnel (1) has at least one bottom support (36).

35. Apparatus according to one of the claims 28 to 34, characterized in that the wheel (37, 40) has a rubber and optionally a pneumatic tyre and a large diameter.

36. Apparatus according to one of the claims 1 to 35, characterized in that with each side wall (6) is associated a nozzle tube (11) and that the nozzle tubes (11) are rotatable about the axis thereof.

37. Apparatus according to claim 36, characterized in that each nozzle tube (11) is adjustable at least between the front end and the central region of the side walls (6).

38. Apparatus according to one of the claims 36 or 37, characterized in that each nozzle tube (11) is arranged in spacing-variable manner relative to the plant row (3).

39. Apparatus according to one of the claims 36 to 38, characterized in that each nozzle tube (11) has at least one, preferably flexible portion with at least one nozzle preferably located on at least one tube end and which for modifying the spray angle of the nozzle located thereon is adjustable with respect to the other nozzles (12) on the nozzle tube (11).

40. Apparatus according to claim 39, characterized in that for spraying the plant stem a valve is located on the lower tube end in the adjustable portion and is controllable by a signal generator in the open position and in that the signal generator cooperates with the stem of each plant.

## Revendications

1. Dispositif pour pulvériser sur des cultures en ligne comprenant un réservoir de produit insecticide porté par un véhicule, une remorque ou analogue, et au moins un tunnel de pulvérisation (1) enjambant une ligne de plantation et possédant des parois latérales (6) disposées à écartement variable des deux côtés de la ligne de plantation, une gouttière collectrice (13) étant placée le long de chacun des bords inférieurs de chacune des parois latérales (6) pour le captage et la récupération du produit excédentaire, dispositif comprenant à l'intérieur du tunnel de pulvérisation (1) des tubes à gicleurs (11) s'étendant suivant une direction essentiellement verticale, la largeur du tunnel de pulvérisation (1) aux extrémités avant et arrière dans la direction du déplacement correspondant à peu près à la largeur des plantes, caractérisé en ce que la largeur du tunnel augmente à partir de l'extrémité avant jusqu'à un écartement maximal des parois latérales (6), puis se réduit à nouveau vers l'extrémité arrière.

2. Dispositif selon la revendication 1, caractérisé en ce que la largeur du tunnel le long du bord inférieur, et le cas échéant, également le long du bord supérieur, reste constante sur la longueur du tunnel de pulvérisation (1).

3. Dispositif selon les revendications 1 ou 2, caractérisé en ce que les parois latérales (6) affectent la forme d'une surface convexe à courbure spatiale continue.

4. Dispositif selon les revendications 1 ou 2, caractérisé en ce que les parois latérales (6) vues en coupe horizontale sont conformées en trapèzes ouverts vers l'intérieur.

5. Dispositif selon les revendications 1 ou 2, caractérisé en ce que les parois latérales (6) vues en coupe horizontale sont conformées en triangles ouverts vers l'intérieur.

6. Dispositif selon l'une des revendications précédentes, caractérisé en ce que les parois latérales (6) présentent au moins dans la partie précédant l'extrémité arrière au moins un dispositif déflecteur (18) orienté contre la direction du déplacement (10) pour détourner le vent dû au déplacement dans le tunnel de pulvérisation (1), et disposé essentiellement transversal à la direction du déplacement.

7. Dispositif selon la revendication 6, caractérisé en ce que le dispositif déflecteur (18) est formé d'une fente d'entrée d'air (19) s'étendant sur chaque paroi latérale (6) sur environ leur hauteur, et d'une surface déflectrice (26) dépassant de la paroi latérale (6) vers l'extérieur et limitant la fente d'entrée d'air (19) vers l'arrière dans la direction du déplacement.

8. Dispositif selon la revendication 7, caractérisé en ce que la fente d'entrée d'air (19) est constituée, d'une part par le bord arrière de la paroi latérale (6), et d'autre part par la surface déflectrice (26) disposée derrière.

9. Dispositif selon la revendication 7, caractérisé en ce que chaque paroi latérale (6) consiste en deux éléments de paroi latérale (6', 6''') disposés l'un derrière l'autre, qui forment la fente d'entrée d'air, l'élément de paroi latérale arrière (6''') présentant sur son bord avant la surface déflectrice (26).

10. Dispositif selon la revendication 9, caractérisé en ce que la surface déflectrice (26) est constituée par la mise en forme correspondante de l'élément de paroi latérale arrière (6‴) au niveau de son bord avant.

11. Dispositif selon les revendications 9 et 10, caractérisé en ce que la largeur de la fente d'entrée d'air (19) est variable.

12. Dispositif selon les revendications 7 à 11, caractérisé en ce que l'angle d'incidence de la surface déflectrice (26) est variable.

13. Dispositif selon l'une des revendications précédentes, caractérisé en ce que chaque paroi latérale (6) consiste en deux portions de paroi latérale (6', 6″) mobiles l'une par rapport à l'autre de façon à faire varier la longueur du tunnel de pulvérisation (1).

14. Dispositif selon les revendications 1 à 13, caractérisé en ce que les portions de paroi latérales (6', 6″) sont télescopiques dans la direction du déplacement (10).

15. Dispositif selon les revendications 1 à 13, caractérisé en ce que les portions de paroi latérale (6', 6″) sont reliées par un bras articulé en parallélogramme.

16. Dispositif selon l'une des revendications précédentes, caractérisé en ce que chaque paroi latérale (6) consiste en deux coques (31,32) disposées essentiellement parallèlement l'une à côté de l'autre, dont au moins la coque intérieure (31) est perforée pour la pénétration du produit insecticide dans l'intervalle (34) entre les coques.

17. Dispositif selon la revendication 16, caractérisé en ce que l'intervalle (34) entre les coques est relié à son niveau inférieur à une pompe d'aspiration.

18. Dispositif selon les revendications 16 ou 17, caractérisé en ce que la coque extérieure (32) est également perforée, et en ce que les perforations (33) des coques intérieure (31) et extérieure (32) sont décalées les unes par rapport aux autres.

19. Dispositif selon l'une des revendications précédentes, caractérisé en ce que la gouttière de collecte (13) disposée le long du bord inférieur des parois latérales (6) comporte transversalement à sa direction longitudinale des parois de cloisonnement qui présentent des passages (52) pour le produit insecticide récupéré.

20. Dispositif selon la revendication 19, caractérisé en ce que les parois de cloisonnement sont formées de bandes de matériau (55) placées de manière amovible dans la gouttière de collecte (13).

21. Dispositif selon les revendications 1 à 20, caractérisé en ce que la gouttière de collecte est recouverte par une tôle perforée.

22. Dispositif selon les revendications 1 à 21, caractérisé en ce que la gouttière de collecte (13), au moins au niveau de ses deux extrémités, est munie d'un couvercle fermé (53).

23. Dispositif selon l'une des revendications précédentes, caractérisé en ce que les parois latérales (6) affectent au niveau de leurs bords inférieurs et de la gouttière de collecte (13) une forme générale inclinée dans un plan vertical, et en ce qu'un puits d'aspiration (30) est disposé au point le plus bas pour une pompe renvoyant le produit insecticide récupéré dans le réservoir du produit.

24. Dispositif selon la revendication 23, caractérisé en ce que le bord inférieur de chaque paroi latérale (6) et la gouttière de collecte (13) sont inclinés à partir des extrémités avant et arrière jusqu'au milieu, et en ce que le puits d'aspiration (30) est disposé au milieu de la paroi latérale.

25. Dispositif selon les revendications 23 ou 24, caractérisé en ce que le bord inférieur de chaque paroi latérale (6) et la gouttière de collecte (13) sont formés de plusieurs sections inclinées les unes vers les autres, un puits d'aspiration (20) étant prévu pour chaque couple de sections inclinées l'une vers l'autre.

26. Dispositif selon les revendications 1 à 25, caractérisé en ce que la gouttière de collecte (13) est rigide et présente un bandeau de récupération (14) en un matériau flexible dépassant de son bord longitudinal tourné vers la rangée de plantes (3).

27. Dispositif selon l'une des revendications précédentes, caractérisé en ce que le tunnel de pulvérisation (1) présente verticalement des appuis au sol (36) souples qui, en cas de dépassement d'un angle d'inclinaison déterminé entre le tunnel de pulvérisation et la rangée de plantes (3) lors de basculements dans une direction parallèle ou perpendiculaire à la direction du déplacement, viennent en contact avec le sol.

28. Dispositif selon la revendication 27, caractérisé en ce que l'appui au sol (36) est constitué par au moins une roue (37,40) placée sur le tunnel de pulvérisation (1).

29. Dispositif selon la revendication 29, caractérisé en ce que la roue (37,40) est placée sur des jambes de force (43) à ressort.

30. Dispositif selon les revendications 28 et 29, caractérisé en ce que la roue (37,40) est placée sur la paroi latérale (6) s'étendant à l'extérieur du tunnel de pulvérisation (1).

31. Dispositif selon les revendications 28 à 30, caractérisé en ce que la roue (37,40) est placée sur la paroi latérale (6) au niveau de sa partie inférieure.

32. Dispositif selon les revendications 28 à 31, caractérisé en ce que la roue (37,40) est montée par l'intermédiaire d'une jambe de force (42) sur un élément porteur (4) du tunnel de pulvérisation (1), par exemple sur une traverse (4) reliant les parois latérales (6).

33. Dispositif selon les revendications 1 à 32, caractérisé en ce qu'une roue est montée à chacune des extrémités avant et arrière des parois latérales (6).

34. Dispositif selon les revendications 1 à 33, comprenant un tunnel de pulvérisation pour chaque rangée d'une pluralité de rangées de plantes voisines, caractérisé en ce que chaque tunnel de pulvérisation (1) présente au moins un appui au sol (36).

35. Dispositif selon les revendications 28 à 34, caractérisé en ce que la roue (37,40) est munie d'un pneu en caoutchouc éventuellement gonflable et présente un grand diamètre.

36. Dispositif selon les revendications 1 à 35, caractérisé en ce qu'un tube de pulvérisation à gicleurs (11) est disposé sur chaque paroi latérale (6) et en ce que les tubes à gicleurs (11) sont mobiles en rotation autour de leurs axes.

37. Dispositif selon la revendication 36, caractérisé en ce que chaque tube à gicleurs (11) est réglable au moins entre l'extrémité avant et la partie médiane de la paroi latérale (6).

38. Dispositif selon les revendications 36 et 37, caractérisé en ce que chaque tube à gicleurs (11) est monté à écartement réglable par rapport à la rangée de plantes (3).

39. Dispositif selon les revendications 36 à 38, caractérisé en ce que chaque tube à gicleurs (11) présente au moins un tronçon de préférence monté sur au moins une extrémité de tube, et de préférence flexible, muni d'au moins un gicleur, ce tronçon étant réglable de façon à faire varier l'angle de pulvérisation entre le gicleur dont il est muni et les autres gicleurs (12) du tube à gicleurs (11).

40. Dispositif selon la revendication 39, caractérisé en ce qu'une vanne est disposée sur le tronçon réglable à l'extrémité inférieure du tube pour pulvériser sur la base des plantes, cette vanne étant commandée en position ouverte par un émetteur de signal, et en ce que l'émetteur de signal agit en référence à la base de chaque plante.

Fig. 1

Fig. 2

Fig. 3

Fig. 4

Fig. 5

Fig. 6

Fig. 7

Fig. 8

14

Fig. 9

Fig. 10

Fig. 11

Fig. 12

Fig. 13

Fig.14

Fig.15

Fig.16

Fig.17

16

Fig. 18

Fig. 19